# EUROPÄISCHE PATENTSCHRIFT

(11) **EP 4 002 677 B1**
(45) Veröffentlichungstag und Bekanntmachung des Hinweises auf die Patenterteilung: **14.08.2024**
(21) Anmeldenummer: 20209224.3
(22) Anmeldetag: 23.11.2020
(51) Int. Cl.: H02P 3/12, H02P 3/22, E05D 1/00, E05F 1/00, E05F 15/657

(54) **TÜRSYSTEM FÜR EIN FAHRZEUG MIT EINEM TÜRFLÜGEL UND VERFAHREN ZUM SELEKTIVEN ABBREMSEN EINES ELEKTRISCH ANTREIBBAREN TÜRFLÜGELS**
DOOR SYSTEM FOR A VEHICLE WITH A DOOR LEAF AND METHOD FOR SELECTIVELY BRAKING AN ELECTRICALLY DRIVEN DOOR LEAF
SYSTÈME DE PORTE POUR UN VÉHICULE DOTÉ D'UNE BATTANT DE PORTE ET PROCÉDÉ DE FREINAGE SÉLECTIF D'UN BATTANT DE PORTE À MOTEUR ÉLECTRIQUE

(43) Veröffentlichungstag der Anmeldung: 25.05.2022
(73) Patentinhaber: Bode - Die Tür GmbH, 34123 Kassel (DE)
(72) Erfinder: Gläsel, Gerd, 34266 Niestetal (DE); Bachmann, Guido, 34302 Guxhagen (DE)
(74) Vertreter: Patentanwälte Bauer Vorberg Kayser

(56) Entgegenhaltungen:
- EP-A2- 2 267 881
- DE-A1- 102005 028 007
- DE-A1- 102005 028 057
- DE-B4- 102005 028 057

## Beschreibung

Die Erfindung betrifft ein Türsystem für ein Fahrzeug mit einem Türflügel sowie ein Verfahren zum selektiven Abbremsen eines elektrisch antreibbaren Türflügels.

Bei Türsystemen für Fahrzeuge und speziell für Fahrzeuge des öffentlichen Personenverkehrs ist es bekannt, den oder die Türflügel des Türsystems per Antrieb durch einen Elektromotor zu verstellen. Der Antrieb durch den Elektromotor erlaubt dank der Ansteuerbarkeit des Elektromotors eine Steuerung oder Regelung der Verstellgeschwindigkeit des Türflügels auf den gewünschten Wert. Überbelastungen oder Beschädigungen durch eine erhöhte Geschwindigkeit und damit durch erhöhte Aufprallkräfte sind also regelmäßig nicht zu befürchten.

Jedoch ist eine manuelle Verstellung des Türflügels nicht auszuschließen und kann in gewissen Situationen sogar erforderlich sein. Für den Fall einer Notentriegelung oder eines Ausfalls des Steuergeräts soll daher auch eine manuelle Verstellung des Türflügels möglich sein. Bei einer solchen manuellen Verstellung ist einerseits zu gewährleisten, dass sie grundsätzlich auch ohne allzu großen Kraftaufwand möglich ist. Dies soll gewährleisten, dass nach Möglichkeit jedermann dazu in der Lage ist. Andererseits soll verhindert werden, dass durch eine allzu kräftige manuelle Betätigung so hohe Verstellgeschwindigkeiten erreicht werden, dass bei Erreichen einer der Endpositionen eine Beschädigung eintreten kann. Bei einer geschwindigkeitsunabhängigen Bremse der manuellen Verstellung besteht also das Risiko, dass sie bei niedrigen Verstellgeschwindigkeiten entweder zu stark bremst oder bei hohen Verstellgeschwindigkeiten nicht stark genug bremst. Ferner ist eine Bremswirkung aus einer solchen Bremse bei der elektrischen Verstellung prinzipiell unerwünscht.

Die DE 10 2005 028 007 A1 beschreibt einen Antrieb zum Betätigen eines beweglichen Flügels. Das Abtriebsglied eines Elektromotors steht über eine Kraftübertragungseinrichtung mit dem Flügel in Wirkverbindung, sodass eine Bewegung des Abtriebsglieds eine Bewegung des Flügels bewirkt. Durch eine Bremseinrichtung ist die Bewegung des Flügels bremsbar, indem der Elektromotor als Generator betreibbar ist. Die Ausgangsspannung des generatorisch betriebenen Elektromotors wird an einen Bremsstromkreis angelegt. Die Bremseinrichtung weist eine von der Ausgangsspannung des generatorisch betriebenen Elektromotors abhängige Bremskraft auf, indem in dem Bremsstromkreis die Drain-Source-Strecke eines Feldeffekttransistors angeordnet.

Andere Bremsschaltungen sind aus der EP 2 267 881 A2 und der DE 10 2005 028 057 A1 bekannt.

Vor diesem Hintergrund besteht die Aufgabe der Erfindung darin, ein Türsystem für ein Fahrzeug mit einem Türflügel sowie ein Verfahren zum selektiven Abbremsen eines elektrisch antreibbaren Türflügels so weiterzuentwickeln und zu verbessern, dass die Bremswirkung im Wesentlichen dann eintritt, wenn eine schnelle manuelle Betätigung des Türflügels auftritt und in anderen Fällen möglichst keine Bremswirkung entstehen zu lassen.

Bezogen auf ein Türsystem für ein Fahrzeug mit einem Türflügel wird diese Aufgabe durch die Merkmale des Anspruchs 1 gelöst. Bezogen auf ein Verfahren zum selektiven Abbremsen eines elektrisch antreibbaren Türflügels wird diese Aufgabe durch die Merkmale des Anspruchs 15 gelöst.

Wesentlich für die Erfindung ist die Erkenntnis, dass sich bei einer manuellen Verstellung des Türflügels ohne Ansteuerung des Elektromotors des Türflügels der Elektromotor im Generatorbetrieb befindet. Die von dem Elektromotor erzeugte Spannung ist dabei eine Funktion der Geschwindigkeit, mit der der Türflügel verstellt wird. Auf dieser Grundlage ist es möglich, einen Bremseffekt in Abhängigkeit der vom Elektromotor als Generator erzeugten Spannung dadurch herbeizuführen, dass nur für bestimmte Bereiche der Generatorspannung eine elektrische Last ein- und damit zugeschaltet wird. Im eingeschalteten Zustand der elektrischen Last und damit bei hoher Verstellgeschwindigkeit tritt die Bremswirkung ein, wohingegen im ausgeschalteten Zustand der Türflügel und daher bei geringer Verstellgeschwindigkeit der Türflügel mit nur geringem Kraftaufwand manuell verstellt werden kann.

Das vorschlagsgemäße Türsystem ist für ein Fahrzeug, wobei das Türsystem einen Türflügel, einen Elektromotor zum Antreiben des Türflügels und eine Bremsschaltung mit einer elektrischen Last zum Abbremsen des Türflügels aufweist.

Bei dem Elektromotor kann es sich grundsätzlich um eine beliebige Art von Elektromotor handeln. Gemäß einer ersten bevorzugten Variante ist der Elektromotor eine Gleichstrommaschine. Der Elektromotor kann aber auch ein bürstenloser Gleichstrommotor sein.

Bei dem vorschlagsgemäßen Türsystem ist die Bremsschaltung dazu eingerichtet, eine bei einer manuellen Verstellung des Türflügels von dem Elektromotor im Generatorbetrieb erzeugte Generatorspannung zu erfassen. Bei dieser Generatorspannung muss es sich nicht notwendig um die volle über den Polen des Elektromotors erzeugte Spannung handeln. Es ist ausreichend, dass es sich um eine erfasste Spannung handelt, welche in irgendeiner Weise auf die von dem Elektromotor im Generatorbetrieb erzeugte Spannung zurückgeht. So kann es etwa sein, dass die erfasste Generatorspannung an einem Spannungsteiler erfasst wird, über den die volle von dem Elektromotor erzeugte Spannung abfällt. Weitere Möglichkeiten einer schaltungstechnischen Veränderung der von dem Elektromotor erzeugten Spannung vor der Erfassung werden untenstehend beschrieben.

Weiter ist bei dem vorschlagsgemäßen Türsystem die Bremsschaltung dazu eingerichtet ist, die elektrische Last einzuschalten wenn sich die erfasste Generatorspannung in einem Übergeschwindigkeitsbereich befindet und ansonsten die elektrische Last auszuschalten. Unter dem Einschalten der elektrischen Last ist dabei vorzugsweise das Herstellen einer elektrischen Verbindung im Sinne des Einschaltens eines Schalters zu verstehen. Umgekehrt ist unter dem Ausschalten der elektrischen Last vorzugsweise das Trennen einer elektrischen Verbindung im Sinne des Ausschaltens eines Schalters zu verstehen.

Die Bremswirkung der elektrischen Last zum Abbremsen des Türflügels tritt also ein, wenn die elektrische Last eingeschaltet ist. Ist hingegen die elektrische Last ausgeschaltet, tritt die Bremswirkung der elektrischen Last nicht ein. Der Übergeschwindigkeitsbereich kann dabei als im Grunde beliebiger Spannungsbereich definiert werden. Dabei kann der Übergeschwindigkeitsbereich auch als nach unten offener Bereich oder nach oben offener Bereich definiert werden. Ebenso kann der Übergeschwindigkeitsbereich als eine Gruppe von separaten Spannungsbereichen definiert werden.

Grundsätzlich kann es sich bei der elektrischen Last um eine beliebige Art von elektrischer Last handeln. Speziell kann die elektrische Last dazu eingerichtet sein, zum Abbremsen des Türflügels eine elektrische Wirkleistung aufzunehmen. Insbesondere kann es sein, dass die elektrische Last dazu eingerichtet ist, zum Abbremsen des Türflügels eine elektrische Scheinleistung aufzunehmen, bei welcher der Betrag der Wirkleistung den Betrag der Blindleistung übersteigt. Die elektrische Last kann dabei grundsätzlich beliebige elektrische oder elektronische Bauteile aufweisen. Gemäß einer bevorzugten Ausführungsform des vorschlagsgemäßen Türsystems ist vorgesehen, dass die elektrische Last einen ohmschen Widerstand zum Abbremsen des Türflügels aufweist. Gemäß einer weiteren bevorzugten Ausführungsform des vorschlagsgemäßen Türsystems ist vorgesehen, dass die elektrische Last eine Stromsenke zum Abbremsen des Türflügels aufweist oder dass die elektrische Last eine solche Stromsenke ist.

Grundsätzlich kann die Generatorspannung auf beliebige Art und Weise erfasst werden. Eine bevorzugte Ausführungsform des vorschlagsgemäßen Türsystems ist dadurch gekennzeichnet, dass die Generatorspannung an einem Erfassungspol der Bremsschaltung erfasst wird und dass die elektrische Last mit dem Erfassungspol elektrisch verbunden ist. Damit ist der Pol, an dem die Erfassung der Spannung des Generators stattfindet mit dem Pol identisch, welcher für die Bremswirkung prinzipiell mit der elektrischen Last verbunden ist. Diese elektrische Verbindung ist unbeschadet der Möglichkeit des Ein- und Ausschaltens der elektrischen Last zu verstehen. Es kann sein, dass die elektrische Last einen mit dem Erfassungspol elektrisch verbundenen Thyristor aufweist. Vorzugsweise ist dieser Thyristor dazu eingerichtet, sich basierend auf einer Spannung am Erfassungspol einzuschalten.

Eine weitere bevorzugte Ausführungsform des vorschlagsgemäßen Türsystems ist dadurch gekennzeichnet, dass der Übergeschwindigkeitsbereich der Spannungsbereich zwischen einem Unter-Spannungsgrenzwert und einem Ober-Spannungsgrenzwert ist. Anders ausgedrückt definieren der Unter-Spannungsgrenzwert und der Ober-Spannungsgrenzwert dann den Übergeschwindigkeitsbereich als den zwischen diesen beiden Werten liegenden Bereich.

Vorschlagsgemäß weist das Türsystem eine steuerbare Spannungsquelle zum Erzeugen einer Motorspannung für einen Motorbetrieb des Elektromotors zum Verstellen des Türflügels aufweist. Im Motorbetrieb des Elektromotors wird elektrische Energie in Bewegungsenergie umgewandelt. Die Steuerung der Spannungsquelle kann grundsätzlich auf beliebige Art und Weise erfolgen und insbesondere auch darin bestehen, dass sie einschaltbar und ausschaltbar ist, wobei dieses Ein- und Ausschalten durch das Schließen bzw. Öffnen eines Schalters realisierbar ist.

Vorschlagsgemäß wird bei dem Motorbetrieb des Elektromotors zum Verstellen des Türflügels die Motorspannung von der Bremsschaltung erfasst. Vorschlagsgemäß liegt die Motorspannung außerhalb des Übergeschwindigkeitsbereichs. Auf diese Weise wird verhindert, dass die Bremswirkung auch bei einem motorisierten Verstellen des Türflügels eintritt. Dabei kann die Erfassung der Motorspannung im Grunde beliebig erfolgen. Für die Erfassung der Motorspannung gelten die sinngemäß gleichen Feststellungen wie für die Erfassung der Bremsspannung. Bevorzugt ist weiter, dass die bei dem Motorbetrieb erfasste Motorspannung den Ober-Spannungsgrenzwert übersteigt.

Gemäß einer weiteren bevorzugten Ausführungsform des vorschlagsgemäßen Türsystems ist vorgesehen, dass die steuerbare Spannungsquelle dazu eingerichtet ist, eine pulsweitenmodulierte Motorspannung für den Motorbetrieb des Elektromotors zu erzeugen. Die Pulsweitenmodulation stellt eine besonders geeignete Art der variablen Ansteuerung eines Elektromotors dar.

Eine bevorzugte Ausführungsform des vorschlagsgemäßen Türsystems ist dadurch gekennzeichnet, dass die Bremsschaltung einen Tiefpassfilter zum Glätten der Generatorspannung vor der Erfassung am Erfassungspol aufweist. Bevorzugt ist der Tiefpassfilter auch zum Glätten der Motorspannung eingerichtet. Anders ausgedrückt ist dann der Tiefpassfilter zwischen dem Elektromotor und dem Erfassungspol geschaltet. Auf diese Weise kann verhindert, dass ein Schalten der elektrischen Last aufgrund transienter Spannungsspitzen o.dgl. erfolgt.

Eine weitere bevorzugte Ausführungsform des vorschlagsgemäßen Türsystems ist dadurch gekennzeichnet, dass die Bremsschaltung einen Gleichrichter zum Gleichrichten der Generatorspannung vor der Erfassung am Erfassungspol aufweist. Bevorzugt ist der Gleichrichter auch zum Gleichrichten der Motorspannung eingerichtet. Anders ausgedrückt ist dann - alternativ oder zusätzlich zu dem Tiefpassfilter - der Gleichrichter zwischen dem Elektromotor und dem Erfassungspol geschaltet. Auf diese Weise wird es leichter möglich, den Absolutbetrag einer Wechselspannung zu erfassen.

Grundsätzlich kann ein in vielen Aspekten beliebiger Zusammenhang zwischen der erzeugten Generatorspannung und der Verstellgeschwindigkeit des Türflügels bestehen. Gemäß einer bevorzugten Ausführungsform des vorschlagsgemäßen Türsystems ist vorgesehen, dass die Generatorspannung in einem Linearbereich von manuellen Verstellgeschwindigkeiten des Türflügels im Wesentlichen linear proportional zu einer Verstellgeschwindigkeit des Türflügels ist. Anders ausgedrückt gibt es jedenfalls einen Bereich von Geschwindigkeiten, mit denen der Türflügel verstellt werden kann, in welchem die Generatorspannung einen linearen Zusammenhang mit der tatsächlichen Verstellgeschwindigkeit des Türflügels aufweist. In so einem Fall ist die Zuordnung zwischen der erfassten Generatorspannung und der Verstellgeschwindigkeit besonders einfach herstellbar.

Gemäß einer weiteren bevorzugten Ausführungsform des vorschlagsgemäßen Türsystems ist vorgesehen, dass bei einer manuellen Verstellung des Türflügels mit einer ersten Verstellgeschwindigkeit eine erste Generatorspannung erfasst wird, welche erste Generatorspannung außerhalb des Übergeschwindigkeitsbereichs ist. Anders ausgedrückt existiert eine Geschwindigkeit, mit der der Türflügel manuell verstellt werden kann, bei welcher die durch diese Verstellung erzeugte Generatorspannung außerhalb desjenigen Bereichs liegt, in welchem die elektrische Last eingeschaltet wird. Es kann also bei dieser ersten Verstellgeschwindigkeit der Türflügel vergleichsweise leichtgängig und ohne wesentliche Bremsung verstellt werden. Regelmäßig handelt es sich bei dieser ersten Verstellgeschwindigkeit um eine vergleichsweise niedrige Geschwindigkeit, bei der keine Beschädigungen am Türsystem durch die Verstellung zu erwarten sind. Bevorzugt unterschreitet die erste Generatorspannung den Unter-Spannungsgrenzwert.

Eine bevorzugte Ausführungsform des vorschlagsgemäßen Türsystems ist dadurch gekennzeichnet, dass bei einer manuellen Verstellung des Türflügels mit einer zweiten Verstellgeschwindigkeit eine zweite Generatorspannung erfasst wird, welche zweite Generatorspannung im Übergeschwindigkeitsbereich ist. Anders ausgedrückt existiert eine weitere Geschwindigkeit, mit der der Türflügel manuell verstellt werden kann, bei welcher weiteren Geschwindigkeit die durch diese Verstellung erzeugte Generatorspannung innerhalb desjenigen Bereichs liegt, in welchem die elektrische Last eingeschaltet wird. Es kann also bei dieser zweiten Verstellgeschwindigkeit der Türflügel nur mit wesentlicher Bremsung verstellt werden. Regelmäßig handelt es sich bei dieser zweiten Verstellgeschwindigkeit um eine vergleichsweise hohe Geschwindigkeit, bei der durchaus Beschädigungen am Türsystem durch die Verstellung zu erwarten sind. Die Bremswirkung dient dazu, die Verstellgeschwindigkeit so weit abzusenken, dass möglichst keine Beschädigungen auftreten können. Insbesondere kann es sein, dass die zweite Generatorspannung die erste Generatorspannung übersteigt. Vorzugsweise überschreitet die zweite Generatorspannung den Unter-Spannungsgrenzwert.

Grundsätzlich kann die Bremswirkung der elektrischen Last beliebig stark ausgestaltet sein. Eine bevorzugte Ausführungsform des vorschlagsgemäßen Türsystems ist dadurch gekennzeichnet, dass die elektrische Last dazu eingerichtet ist, nach ihrem Einschalten die manuelle Verstellung des Türflügels so stark abzubremsen, dass verhindert wird, dass durch eine durch manuelle Betätigung bewirkte Erhöhung der Verstellgeschwindigkeit des Türflügels die erfasste Generatorspannung den Übergeschwindigkeitsbereich verlässt. Anders ausgedrückt soll verhindert werden, dass manuell die Verstellgeschwindigkeit so stark erhöht wird, dass die Bremswirkung durch Ausschalten der elektrischen Last wieder entfällt. Denn in so einem Fall wäre das Risiko einer Beschädigung des Türsystems besonders hoch.

Grundsätzlich kann es sein, dass der Türflügel auf beliebige Art und Weise verstellt wird. Eine weitere bevorzugte Ausführungsform des vorschlagsgemäßen Türsystems ist dadurch gekennzeichnet, dass der Türflügel ein Schiebetürflügel ist und dass die manuelle Verstellung des Türflügels eine Verschiebung des Türflügels ist.

Grundsätzlich kann es sein, dass die Bremswirkung der elektrischen Last in beliebiger Weise von der Verstellgeschwindigkeit abhängt. Insbesondere kann es sein, dass die Bremswirkung der elektrischen Last im Wesentlichen unabhängig von der Verstellgeschwindigkeit ist. Gemäß einer bevorzugten Ausführungsform des vorschlagsgemäßen Türsystems ist vorgesehen, dass die elektrische Last dazu eingerichtet ist, eingeschaltet eine im Wesentlichen zu einer Verstellgeschwindigkeit des Türflügels proportionale Bremskraft auf den Türflügel auszuüben.

Eine bevorzugte Ausführungsform des vorschlagsgemäßen Türsystems ist dadurch gekennzeichnet, dass die Bremsschaltung dazu eingerichtet ist, bei ausgeschalteter elektrischer Last im Wesentlichen verlustleistungsfrei zu sein. Auf dieser Weise beeinträchtigt die elektrische Last die manuelle Verstellung in bestimmten Bereichen der Verstellgeschwindigkeit nicht.

Das vorschlagsgemäße Verfahren dient dem selektiven Abbremsen eines elektrisch antreibbaren Türflügels, wobei der Türflügel von einem Türsystem eines Fahrzeugs umfasst ist und von einem Elektromotor des Türsystems antreibbar ist.

Bei dem vorschlagsgemäßen Verfahren wird der Türflügel manuell verstellt und eine von dem Elektromotor im Generatorbetrieb erzeugte Generatorspannung erfasst. Weiter wird bei dem vorschlagsgemäßen Verfahren eine elektrische Last zum Abbremsen des Elektromotors eingeschaltet, wenn sich die erfasste Generatorspannung in einem Übergeschwindigkeitsbereich befindet und ansonsten die elektrische Last ausgeschaltet.

Bevorzugte Ausführungsformen des vorschlagsgemäßen Türsystems entsprechend bevorzugten Ausführungsformen des vorschlagsgemäßen Verfahrens und umgekehrt.

Weitere Einzelheiten, Merkmale, Ziele und Vorteile der vorliegenden Erfindung werden nachfolgend anhand der lediglich ein Ausführungsbeispiel wiedergebenden Zeichnung erläutert. In der Zeichnung zeigt
- Fig. 1: eine Prinzipdarstellung eines Ausführungsbeispiels eines vorschlagsgemäßen Türsystems zur Ausführung eines Ausführungsbeispiels des vorschlagsgemäßen Verfahrens und
- Fig. 2: eine Darstellung einer in dem Türsystem der Fig. 1 erfassten Generatorspannung.

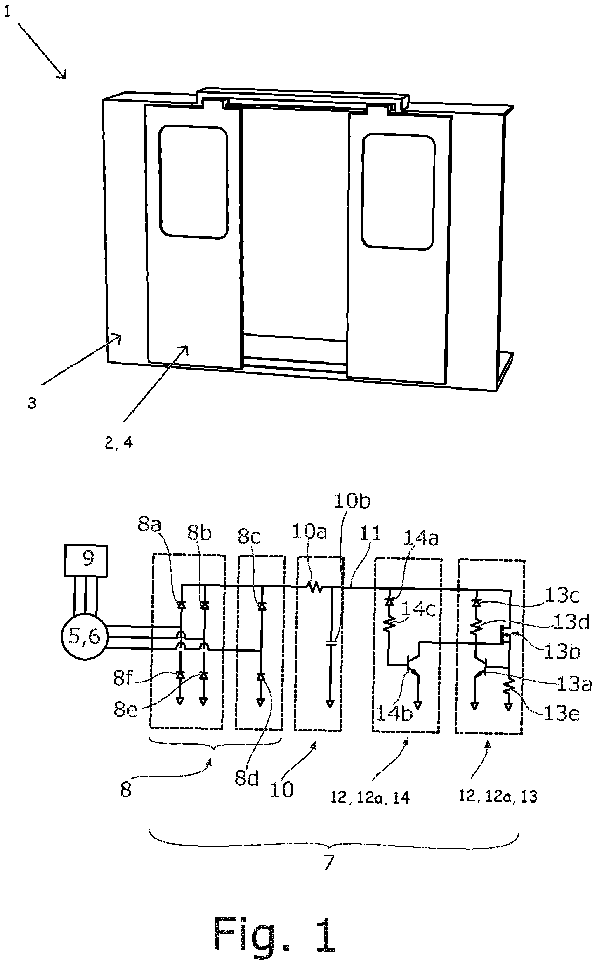

Bei dem in der Fig. 1 dargestellten Türsystem handelt es sich um ein Schiebetürsystem eines Fahrzeugs 1. Bei dem Fahrzeug 1 handelt es sich hier speziell um ein Schienenfahrzeug des öffentlichen Personennahverkehrs. Das Fahrzeug 1 weist einen Türflügel 2 - bei welchem Türflügel 2 es sich speziell um einen Schiebetürflügel 4 handelt - und einen entsprechenden Türrahmen 3 auf.

Der Türflügel 2 kann elektrisch verstellt werden. Zu diesem Zweck weist das Türsystem der Fig. 1 einen hier als dreiphasigen bürstenlosen Gleichstrommotor 5 ausgebildeten Elektromotor 6 auf. Die drei Pole des Elektromotors 6 sind einerseits mit einer Spannungsquelle 9 und andererseits mit einer Bremsschaltung 7 und hier speziell mit einem Gleichrichter 8 der Bremsschaltung 7 elektrisch verbunden. Der Gleichrichter 8 besteht aus insgesamt sechs Gleichrichterdioden 8a-f.

Weiter weist die Bremsschaltung 7 einen dem Gleichrichter 8 nachgeschalteten Tiefpassfilter 10 auf, welcher aus einem Filterwiderstand 10a und einem Kondensator 10b besteht und die durch den Gleichrichter 8 gleichgerichtete Spannung glättet. Die auf diese Weise gleichgerichtete und geglättete Spannung vom Elektromotor 6 liegt nun an einem Erfassungspol 11 einer als Stromsenke 12a ausgebildeten elektrischen Last 12 der Bremsschaltung 7 an.

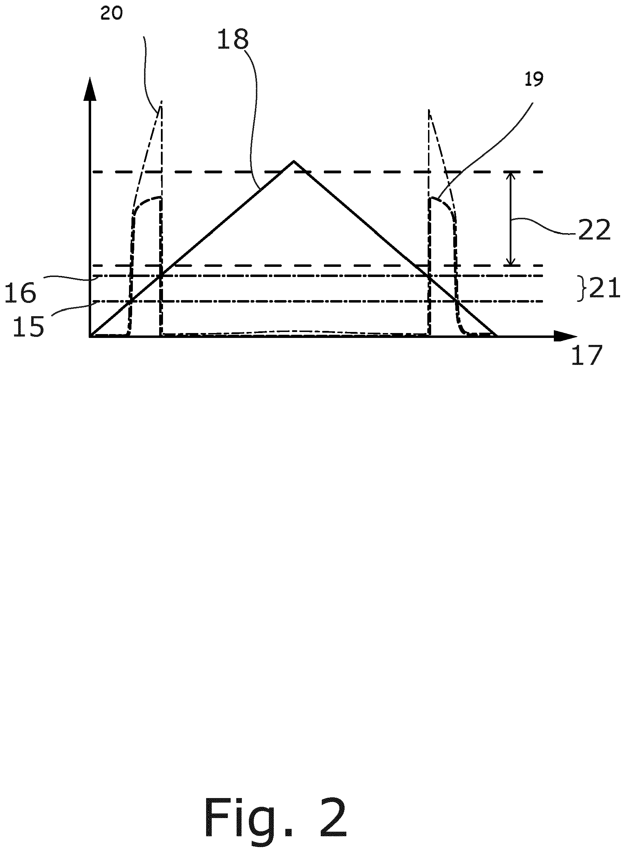

Diese Stromsenke 12a umfasst eine Einschaltschaltung 13 mit einem ersten Bipolartransistor 13a, einem MOSFET 13b, einer ersten Zenerdiode 13c sowie einem ersten Widerstand 13d und einem zweiten Widerstand 13e. Sobald die Spannung am Erfassungspol 11 hinreichend groß ist zum Einschalten des MOSFET 13b, schaltet sich die Stromsenke 12a und damit die elektrische Last 12 ein. Diese Spannung, welche hier den Unter-Spannungsgrenzwert 15 bildet, kann im Wesentlichen durch die erste Zenerdiode 13c eingestellt werden, wobei die Leistungsaufnahme und damit die Bremswirkung der Stromsenke 12a im Wesentlichen durch den zweiten Widerstand 13e eingestellt werden kann. Dieser Unter-Spannungsgrenzwert 15 ist in der Fig. 2 wiedergegeben.

Neben der Einschaltschaltung 13 weist die Stromsenke 12a auch eine Ausschaltschaltung 14 auf, welche aus einer zweiten Zenerdiode 14a, einem zweiten Bipolartransistor 14b und einem dritten Widerstand 14c besteht. Durch die zweite Zenerdiode 14a kann der Spannungswert an dem Eingangspol 11 eingestellt werden, ab welchem sich der zweite Bipolartransistor 14b einschaltet. Das Einschalten des zweiten Bipolartransistors 14b wiederum führt zu einem Ausschalten des MOSFETs 13b und damit zu einem Ausschalten der Stromsenke 12a insgesamt. Der Spannungswert, ab welchem sich der zweite Bipolartransistor 14b einschaltet bildet einen Ober-Spannungsgrenzwert 16, welcher größer ist als der Unter-Spannungsgrenzwert 15.

Der Ober-Spannungsgrenzwert 16 und - wie bereits erwähnt - der Unter-Spannungsgrenzwert 15 sind in der Fig. 2 dargestellt, ebenso wie ein jeweiliger Verlauf der Eingangsspannung 18, des Stroms 19 und der aufgenommenen elektrischen Leistung 20 an dem Erfassungspol 11 der Stromsenke 12a über der Zeitachse 17. Erkennbar ist, dass die Stromsenke 12a keine Leistung 20 aufnimmt, wenn die Eingangsspannung 18 unterhalb des Unter-Spannungsgrenzwerts 15 bleibt. Nachdem die Eingangsspannung 18 den Unter-Spannungsgrenzwert 15 erreicht und überschritten hat, steigt die aufgenommene Leistung 20 im Wesentlichen linear mit der Eingangsspannung 18 an. Dies gilt, bis die Eingangsspannung 18 den Ober-Spannungsgrenzwert 16 überschreitet, wobei nach diesem Überschreiten wiederum keine Leistung 20 mehr durch die Stromsenke 12a aufgenommen wird. Damit definieren der Unter-Spannungsgrenzwert 15 und der Ober-Spannungsgrenzwert 16 einen Übergeschwindigkeitsbereich 21 der Spannung zwischen sich. Nur in diesem Übergeschwindigkeitsbereich 21 ist die Stromsenke 12a eingeschaltet.

Im Motorbetrieb erzeugt die Spannungsquelle 9 eine pulsweitenmodulierte Motorspannung, durch welche der Elektromotor 6 den Türflügel 2 verstellt. Diese Motorspannung ist dabei so hoch, dass sich die resultierende Eingangsspannung 18 am Erfassungspol 11 in einem Motorbetriebsbereich 22 bewegt, welcher oberhalb des Ober-Spannungsgrenzwerts 16 und damit außerhalb des Übergeschwindigkeitsbereichs 21 liegt. Daher bleibt die Stromsenke 12a ausgeschaltet und entfaltet keine Bremswirkung.

Bei einer manuellen Verstellung des Türflügels 2 mit einer niedrigen Verstellgeschwindigkeit verbleibt die Generatorspannung unterhalb des Unter-Spannungsgrenzwerts 15 und damit ebenfalls außerhalb des Übergeschwindigkeitsbereichs 21 eine solche Verstellung mit niedriger Geschwindigkeit kann daher ebenfalls ohne Bremswirkung der Stromsenke 12a erfolgen.

Mit steigender Verstellgeschwindigkeit bei der manuellen Verstellung des Türflügels 2 wird jedoch der Unter-Spannungsgrenzwert 15 erreicht und es kommt zu einem Einschalten der Stromsenke 12a. Die daraus resultierende Bremswirkung verhindert eine weitergehende Erhöhung der Verstellgeschwindigkeit bei der manuellen Verstellung. Im Ergebnis bleibt die Verstellgeschwindigkeit bei der manuellen Verstellung unterhalb eines Werts, bei dem das Risiko einer Beschädigung des Türsystems besteht.

## Patentansprüche

1. Türsystem für ein Fahrzeug (1), wobei das Türsystem einen Türflügel (2), einen Elektromotor (6) zum Antreiben des Türflügels (2) und eine Bremsschaltung (7) mit einer elektrischen Last (12) zum Abbremsen des Türflügels (2) aufweist, wobei die Bremsschaltung (7) dazu eingerichtet ist, eine bei einer manuellen Verstellung des Türflügels (2) von dem Elektromotor (6) im Generatorbetrieb erzeugte Generatorspannung zu erfassen und weiter dazu eingerichtet ist, die elektrische Last (12) einzuschalten wenn sich die erfasste Generatorspannung in einem Übergeschwindigkeitsbereich (21) befindet und ansonsten die elektrische Last (12) auszuschalten, und wobei das Türsystem eine steuerbare Spannungsquelle (9) zum Erzeugen einer Motorspannung für einen Motorbetrieb des Elektromotors (6) zum Verstellen des Türflügels (2) aufweist,
**dadurch gekennzeichnet, dass** bei dem Motorbetrieb des Elektromotors (6) zum Verstellen des Türflügels (2) die Motorspannung von der Bremsschaltung (7) erfasst wird und dass die Motorspannung außerhalb des Übergeschwindigkeitsbereichs (21) liegt, wodurch die elektrische Last (12) ausgeschaltet ist und keine Bremswirkung eintritt.

2. Türsystem nach Anspruch 1, **dadurch gekennzeichnet, dass** der Elektromotor (6) eine Gleichstrommaschine oder eine bürstenloser Gleichstrommotor (5) ist.

3. Türsystem nach Anspruch 1 oder 2, **dadurch gekennzeichnet, dass** die Generatorspannung an einem Erfassungspol (11) der Bremsschaltung (7) erfasst wird und dass die elektrische Last (12) mit dem Erfassungspol (11) elektrisch verbunden ist.

4. Türsystem nach einem der Ansprüche 1 bis 3, **dadurch gekennzeichnet, dass** der Übergeschwindigkeitsbereich (21) der Spannungsbereich zwischen einem Unter-Spannungsgrenzwert (15) und einem Ober-Spannungsgrenzwert (16) ist.

5. Türsystem nach Anspruch 4, **dadurch gekennzeichnet, dass** die bei dem Motorbetrieb erfasste Motorspannung den Ober-Spannungsgrenzwert (16) übersteigt.

6. Türsystem nach einem der Ansprüche 1 bis 5, **dadurch gekennzeichnet, dass** die steuerbare Spannungsquelle (9) dazu eingerichtet ist, eine pulsweitenmodulierte Motorspannung für den Motorbetrieb des Elektromotors (6) zu erzeugen.

7. Türsystem nach einem der Anspruch 1 bis 6, **dadurch gekennzeichnet, dass** die Bremsschaltung (7) einen Tiefpassfilter (10) zum Glätten der Generatorspannung vor der Erfassung am Erfassungspol (11) aufweist, vorzugsweise, dass die Bremsschaltung (7) einen Gleichrichter (8) zum Gleichrichten der Generatorspannung vor der Erfassung am Erfassungspol (11) aufweist.

8. Türsystem nach einem der Ansprüche 1 bis 7, **dadurch gekennzeichnet, dass** die Generatorspannung in einem Linearbereich von manuellen Verstellgeschwindigkeiten des Türflügels (2) im Wesentlichen linear proportional zu einer Verstellgeschwindigkeit des Türflügels (2) ist.

9. Türsystem nach einem der Ansprüche 1 bis 8, **dadurch gekennzeichnet, dass** bei einer manuellen Verstellung des Türflügels (2) mit einer ersten Verstellgeschwindigkeit eine erste Generatorspannung erfasst wird, welche erste Generatorspannung außerhalb des Übergeschwindigkeitsbereichs (21) ist, vorzugsweise, dass die erste Generatorspannung den Unter-Spannungsgrenzwert (15) unterschreitet.

10. Türsystem nach einem der Ansprüche 1 bis 9, **dadurch gekennzeichnet, dass** bei einer manuellen Verstellung des Türflügels (2) mit einer zweiten Verstellgeschwindigkeit eine zweite Generatorspannung erfasst wird, welche zweite Generatorspannung im Übergeschwindigkeitsbereich (21) ist, insbesondere, dass die zweite Generatorspannung die erste Generatorspannung übersteigt, vorzugsweise, dass die zweite Generatorspannung den Unter-Spannungsgrenzwert (15) überschreitet.

11. Türsystem nach einem der Ansprüche 1 bis 10, **dadurch gekennzeichnet, dass** die elektrische Last (12) dazu eingerichtet ist, nach ihrem Einschalten die manuelle Verstellung des Türflügels (2) so stark abzubremsen, dass verhindert wird, dass durch eine durch manuelle Betätigung bewirkte Erhöhung der Verstellgeschwindigkeit des Türflügels (2) die erfasste Generatorspannung den Übergeschwindigkeitsbereich (21) verlässt.

12. Türsystem nach einem der Ansprüche 1 bis 11, **dadurch gekennzeichnet, dass** der Türflügel (2) ein Schiebetürflügel (4) ist und dass die manuelle Verstellung des Türflügels (2) eine Verschiebung des Türflügels (2) ist.

13. Türsystem nach einem der Ansprüche 1 bis 12, **dadurch gekennzeichnet, dass** die elektrische Last (12) dazu eingerichtet ist, eingeschaltet eine im Wesentlichen zu einer Verstellgeschwindigkeit des Türflügels (2) proportionale Bremskraft auf den Türflügel (2) auszuüben.

14. Türsystem nach einem der Ansprüche 1 bis 13, **dadurch gekennzeichnet, dass** die Bremsschaltung (7) dazu eingerichtet ist, bei ausgeschalteter elektrischer Last (12) im Wesentlichen verlustleistungsfrei zu sein.

15. Verfahren zum selektiven Abbremsen eines elektrisch antreibbaren Türflügels (2), wobei der Türflügel (2) von einem Türsystem eines Fahrzeugs (1) umfasst ist und von einem Elektromotor (6) des Türsystems antreibbar ist, wobei der Türflügel (2) manuell verstellt wird und eine von dem Elektromotor (6) im Generatorbetrieb erzeugte Generatorspannung erfasst wird, wobei eine elektrische Last (12) zum Abbremsen des Elektromotors (6) eingeschaltet wird, wenn sich die erfasste Generatorspannung in einem Übergeschwindigkeitsbereich (21) befindet und ansonsten die elektrische Last (12) ausgeschaltet wird, und wobei das Türsystem eine steuerbare Spannungsquelle (9) zum Erzeugen einer Motorspannung für einen Motorbetrieb des Elektromotors (6) zum Verstellen des Türflügels (2) aufweist, **dadurch gekennzeichnet, dass** bei dem Motorbetrieb des Elektromotors (6) zum Verstellen des Türflügels (2) die Motorspannung von der Bremsschaltung (7) erfasst wird und dass die Motorspannung außerhalb des Übergeschwindigkeitsbereichs (21) liegt, wodurch die elektrische Last (12) ausgeschaltet ist und keine Bremswirkung eintritt.

## Claims

1. A door system for a vehicle (1), wherein the door system has a door leaf (2), an electric motor (6) for driving the door leaf (2), and a braking circuit (7) with an electrical load (12) for braking the door leaf (2), wherein the braking circuit (7) is configured to detect a generator voltage which is generated on a manual moving of the door leaf (2) by the electric motor (6) in generator operation, and is further configured to switch on the electrical load (12) when the detected generator voltage is situated in an overspeed range (21), and otherwise to switch off the electrical load (12), and wherein the door system has a controllable voltage source (9) for generating a motor voltage for a motor operation of the electric motor (6) for moving the door leaf (2),
**characterized in that** on a motor operation of the electric motor (6) for moving the door leaf (2), the motor voltage is detected by the braking circuit (7) and that the motor voltage lies outside the overspeed range (21), whereby the electrical load (12) is switched off and no braking effect occurs.

2. The door system according to Claim 1, **characterized in that** the electric motor (6) is a direct current machine or a brushless direct current motor (5).

3. The door system according to Claim 1 or 2, **characterized in that** the generator voltage is detected at a detection pole (11) of the braking circuit (7) and that the electrical load (12) is electrically connected to the detection pole (11).

4. The door system according to one of Claims 1 to 3, **characterized in that** the overspeed range (21) of the voltage range is between an undervoltage limit value (15) and a high voltage limit value (16).

5. The door system according to Claim 4, **characterized in that** the motor voltage which is detected at the motor operation exceeds the high voltage limit value (16).

6. The door system according to one of Claims 1 to 5, **characterized in that** the controllable voltage source (9) is configured to generate a pulse-width-modulated motor voltage for the motor operation of the electric motor (6).

7. The door system according to one of Claims 1 to 6, **characterized in that** the braking circuit (7) has a low pass filter (10) for smoothing out the generator voltage before the detection at the detection pole (11), preferably that the braking circuit (7) has a rectifier (8) for rectifying the generator voltage before the detection at the detection pole (11).

8. The door system according to one of Claims 1 to 7, **characterized in that** the generator voltage is substantially linearly proportional to a movement speed of the door leaf (2) in a linear range of manual movement speeds of the door leaf (2).

9. The door system according to one of Claims 1 to 8, **characterized in that** on a manual moving of the door leaf (2) at a first movement speed, a first generator voltage is detected, which first generator voltage is outside the overspeed range (21), preferably that the first generator voltage falls below the undervoltage limit value (15).

10. The door system according to one of Claims 1 to 9, **characterized in that** on a manual moving of the door leaf (2) at a second movement speed, a second generator voltage is detected, which second generator voltage is in the overspeed range (21), in particular that the second generator voltage exceeds the first generator voltage, preferably that the second generator voltage exceeds the undervoltage limit value (15).

11. The door system according to one of Claims 1 to 10, **characterized in that** the electrical load (12) is configured, after its switching on, to brake the manual moving of the door leaf (2) so intensively that the detected generator voltage is prevented from leaving the overspeed range (21) by an increase of the movement speed of the door leaf (2) brought about by manual actuation.

12. The door system according to one of Claims 1 to 11, **characterized in that** the door leaf (2) is a sliding door leaf (4) and that the manual moving of the door leaf (2) is a shifting of the door leaf (2).

13. The door system according to one of Claims 1 to 12, **characterized in that** the electrical load (12) is configured to exert, switched on, a braking force onto the door leaf (2) which is substantially proportional to a movement speed of the door leaf (2).

14. The door system according to one of Claims 1 to 13, **characterized in that** the braking circuit (7) is configured, with switched-off electrical load (12), to be substantially power loss free.

15. A method for the selective braking of an electrically drivable door leaf (2), wherein the door leaf (2) is comprised by a door system of a vehicle (1) and is drivable by an electric motor (6) of the door system wherein the door leaf (2) is moved manually and a generator voltage which is generated by the electric motor (6) in the generator operation is detected, wherein an electrical load (12) for braking the electric motor (6) is switched on when the detected generator voltage is situated in an overspeed range (21) and otherwise the electrical load (12) is switched off, and wherein the door system has a controllable voltage source (9) for generating a motor voltage for a motor operation of the electric motor (6) for moving the door leaf (2), **characterized in that** on a motor operation of the electric motor (6) for moving the door leaf (2) the motor voltage is detected by the braking circuit (7) and that the motor voltage lies outside the overspeed range (21), whereby the electrical load (12) is switched off and no braking effect occurs.

## Revendications

1. Système de porte pour un véhicule (1), sachant que le système de porte comporte un battant de porte (2), un moteur électrique (6) pour entraîner le battant de porte (2) et un circuit de freinage (7) avec une charge électrique (12) pour freiner le battant de porte (2), sachant que le circuit de freinage (7) est agencé pour saisir une tension de générateur produite par le moteur électrique (6) pendant le fonctionnement de générateur lors d'un déplacement manuel du battant de porte (2) et est en plus agencé pour mettre en marche la charge électrique (12), si la tension de générateur saisie se trouve dans une plage de survitesse (21) et sinon arrêter la charge électrique (12) et sachant que le système de porte comporte une source de tension (9) pilotable pour produire une tension de moteur pour un fonctionnement de moteur du moteur électrique (6) pour déplacer le battant de porte (2),
**caractérisé en ce que** la tension du moteur est saisie par le circuit de freinage (7) lors du fonctionnement de moteur du moteur électrique (6) pour déplacer du battant de porte (2) et **en ce que** la tension du moteur se situe en dehors de la plage de survitesse (21), la charge électrique (12) étant débranchée et aucun effet de freinage ne se produisant.

2. Système de porte selon la revendication 1, **caractérisé en ce que** le moteur électrique (6) est un système à courant continu ou un moteur à courant continu sans balais (5).

3. Système de porte selon la revendication 1 ou 2, **caractérisé en ce que** la tension de générateur est saisie à un pôle de saisie (11) du circuit de freinage (7) et **en ce que** la charge électrique (12) est électriquement reliée au pôle de saisie (11).

4. Système de porte selon l'une quelconque des revendications 1 à 3, **caractérisé en ce que** la plage de survitesse (21) est la plage de tension entre une valeur limite de sous-tension (15) et une valeur limite de surtension (16).

5. Système de porte selon la revendication 4, **caractérisé en ce que** la tension du moteur saisie pendant le fonctionnement du moteur dépasse la valeur limite de tension (16) supérieure.

6. Système de porte selon l'une quelconque des revendications 1 à 5, **caractérisé en ce que** la source de tension (9) pilotable est agencée pour produire une tension de moteur à modulation d'impulsions en largeur pour le fonctionnement du moteur du moteur électrique (6).

7. Système de porte selon l'une quelconque des revendications 1 à 6, **caractérisé en ce que** le circuit de freinage (7) comporte un filtre passe bas (10) pour lisser la tension de générateur avant la saisie sur le pôle de saisie (11), de préférence, **en ce que** le circuit de freinage (7) comporte un redresseur (8) pour redresser la tension de générateur avant la saisie sur le pôle de saisie (11).

8. Système de porte selon l'une quelconque des revendications 1 à 7, **caractérisé en ce que** la tension de générateur se situe dans une plage linéaire de vitesses de déplacement manuelles du battant de porte (2) pour l'essentiel d'une façon linéairement proportionnelle à une vitesse de déplacement du battant de porte (2).

9. Système de porte selon l'une quelconque des revendications 1 à 8, **caractérisé en ce qu'**une première tension de générateur est saisie avec une première vitesse de déplacement lors d'un déplacement manuel du battant de porte (2), laquelle première tension de générateur se situe en dehors de la plage de survitesse (21), de préférence, **en ce que** la première tension de générateur est inférieure à la valeur limite de tension (15) inférieure.

10. Système de porte selon l'une quelconque des revendications 1 à 9, **caractérisé en ce qu'**une deuxième tension de générateur est saisie avec une deuxième vitesse de déplacement lors d'un déplacement manuel du battant de porte (2), laquelle deuxième tension de générateur se situe dans la plage de survitesse (21), en particulier, **en ce que** la deuxième tension de générateur dépasse la première tension de générateur, de préférence, **en ce que** la deuxième tension de générateur est inférieure à la valeur limite de tension (15) inférieure.

11. Système de porte selon l'une quelconque des revendications 1 à 10, **caractérisé en ce que** la charge électrique (12) est agencée pour freiner, après sa mise en marche, le déplacement manuel du battant de porte (2) si fortement que cela évite que la tension de générateur saisie quitte la plage de survitesse (21) par une augmentation de la vitesse de déplacement du battant de porte (2), causée par un actionnement manuel.

12. Système de porte selon l'une quelconque des revendications 1 à 11, **caractérisé en ce que** le battant de porte (2) est un battant de porte coulissante (4) et **en ce que** le déplacement manuel du battant de porte (2) est un coulissement du battant de porte (2).

13. Système de porte selon l'une quelconque des revendications 1 à 12, **caractérisé en ce que** la charge électrique (12) est agencée pour exercer, connectée, une force de freinage sur le battant de porte (2), proportionnelle pour l'essentiel à une vitesse de déplacement du battant de porte (2).

14. Système de porte selon l'une quelconque des revendications 1 à 13, **caractérisé en ce que** le circuit de freinage (7) est agencé pour être pour l'essentiel exempt de perte de puissance lorsque la charge électrique (12) est déconnectée.

15. Procédé de freinage sélectif d'un battant de porte (2) pouvant être entraîné électriquement, sachant que le battant de porte (2) est compris par un système de porte d'un véhicule (1) et peut être entraîné par un moteur électrique (6) du système de porte,
sachant que le battant de porte (2) est déplacé manuellement et une tension de générateur produite par le moteur électrique (6) au cours du fonctionnement de générateur est saisie,
sachant qu'une charge électrique (12) est mise en marche pour freiner le moteur électrique (6), si la tension de générateur saisie se trouve dans une plage de survitesse (21) et sinon la charge électrique (12) est déconnectée et sachant que le système de porte comporte une source de tension (9) pilotable pour produire une tension de moteur pour un fonctionnement de moteur du moteur électrique (6) pour déplacer le battant de porte (2),
**caractérisé en ce que** la tension du moteur est saisie par le circuit de freinage (7) lors du fonctionnement de moteur du moteur électrique (6) pour déplacer le battant de porte (2) et **en ce que** la tension du moteur se situe en dehors de la plage de survitesse (21), la charge électrique (12) étant débranchée et aucun effet de freinage ne se produisant.
